Europäisches Patentamt

European Patent Office

Office européen des brevets

(19)

(11) Veröffentlichungsnummer: **0 008 088**
**B1**

(12) **EUROPÄISCHE PATENTSCHRIFT**

(45) Veröffentlichungstag der Patentschrift:
14.10.81

(51) Int. Cl.³: **C 03 B 35/20**

(21) Anmeldenummer: **79102788.1**

(22) Anmeldetag: **03.08.79**

(54) Vorrichtung zum Transportieren von Glasscheiben in vertikaler Lage durch eine Behandlungsstation.

(30) Priorität: **11.08.78 FR 7823709**

(43) Veröffentlichungstag der Anmeldung:
**20.02.80 Patentblatt 80/4**

(45) Bekanntmachung des Hinweises auf die Patenterteilung:
**14.10.81 Patentblatt 81/41**

(84) Benannte Vertragsstaaten:
**BE DE FR GB IT SE**

(56) Entgegenhaltungen:
**US-A-2 103 850**
**US-A-2 115 106**
**US-A-2 151 266**

(73) Patentinhaber: **SAINT-GOBAIN INDUSTRIES, 62, Bd Victor Hugo, F-92209 Neuilly sur Seine (FR)**

(84) Benannte Vertragsstaaten: **BE FR GB IT SE**

(73) Patentinhaber: **Vereinigte Glaswerke GmbH, Viktoriaallee 3-5, D-5100 Aachen (DE)**

(84) Benannte Vertragsstaaten: **DE**

(72) Erfinder: **Roth, Mario, Laurentiusstrasse 13, D-5100 Aachen (DE)**
Erfinder: **Pagel, Werner, Christian-Derichs-Strasse 4, D-5120 Herzogenrath (DE)**
Erfinder: **Schmidt, Günther, Uersfeld 29, D-5100 Aachen-Richterich (DE)**
Erfinder: **Hausmann, Laurenz, Schulstrasse 8, D-5133 Gangelt (DE)**

(74) Vertreter: **Biermann, Wilhelm, Dr.-Ing., Compagnie de Saint-Gobain-Pont-A-Mousson Zweigniederlassung Deutschland Postfach 14 90 Oppenhoffallee 143, D-5100 Aachen (DE)**

## Vorrichtung zum Transportieren von Glasscheiben in vertikaler Lage durch eine Behandlungsstation

Die Erfindung betrifft eine Vorrichtung zum Transportieren von Glasscheiben in vertikaler Lage durch eine Behandlungsstation mit Hilfe von die Glasscheiben an ihrer oberen Kante fassenden, unter Schwerkraftwirkung sich schließenden Greifvorrichtungen, die an einem Bügel befestigt sind, der auf einer Tragschiene eines verfahrbaren Transportwagens justierbar aufliegt. Transportvorrichtungen dieser Art finden beim Biegen und/oder Vorspannen von Glasscheiben Anwendung.

Eine Vorrichtung dieser Art ist z. B. in der US-PS 3 010 753 beschrieben. Zur Veränderung der Position des eine Greifvorrichtung tragenden Bügels sind dort auf der Auflagefläche der Tragschiene Vertiefungen vorgesehen, in die die Spitzen von Schraubbolzen eingesetzt werden, die den oberen Quersteg des Bügels durchdringen.

Bei einer anderen bekannten Ausführungsform ist die Tragschiene des Transportwagens zumindest bereichsweise in Form einer Zahnleiste ausgebildet.

In die so gebildeten Vertiefungen wird ein die eigentliche Greifvorrichtung tragender Haken oder Ring an der gewünschten Stelle eingesetzt (DE-PS 1 596 394).

In manchen Fällen ist eine sehr genaue Positionierung der Glasscheiben bzw. der die Glasscheiben tragenden Gehänge auf der Tragschiene des Transportwagens erforderlich oder wünschenswert. Das ist beispielsweise der Fall, wenn den Glasscheiben in einer Preßbiegestation Biegungen mit kleinen Krümmungsradien erteilt werden sollen. Wenn die zu biegende Glasscheibe nicht sehr genau positioniert ist, besteht die Gefahr, daß die vorgegebene Toleranz der endgültigen Scheibenform überschritten wird, so daß die Glasscheibe nicht verkaufsfähig ist.

Ferner ist in vielen Fällen bei der Herstellung gebogener Glasscheiben eine genaue Positionierung der Greifvorrichtungen in bezug auf die Tragschiene bzw. in bezug auf die Biegewerkzeuge von großer Bedeutung. Das um so mehr, je stärker die Glasscheiben gebogen werden. Die Zangen dürfen nach dem Biegevorgang, d. h. beim Zurückziehen der Preßwerkzeuge, keine deformierenden Kräfte auf die noch leicht verformbare Glasscheibe ausüben. Insbesondere bei Verwendung von Mehrfachgehängen ist es zu diesem Zweck bekannt, den Aufhängepunkt eines Mehrfachgehänges an der Tragschiene des Transportwagens so zu wählen, daß er in der die Schwerlinie der gebogenen Glasscheibe in deren Längsrichtung durchsetzenden vertikalen Ebene angeordnet ist (DE-PS 1 596 394), wobei auch hier eine sehr genaue Positionierung erforderlich ist.

Die bekannten Konstruktionen zum Verstellen bzw. Justieren der Greifvorrichtungen bzw. Mehrfachgehänge auf den Tragbalken bzw.

Tragschienen des Transportwagens sind verhältnismäßig grob. Das ist verständlich, wenn man bedenkt, daß die Transportvorrichtungen und Gehänge ständigen Temperaturwechseln von Raumtemperatur bis oberhalb 650° C unterworfen sind, so daß unter diesen Bedingungen nur robuste Konstruktionen funktionstüchtig bleiben.

Da die bekannten Vorrichtungen der genannten Gattung hohen Anforderungen an eine feinstufige Verstellungsmöglichkeit nicht genügen, andererseits aber eine feinstufige Justierungsmöglichkeit der Greifvorrichtung und/oder der Gehänge auf der Tragschiene des Transportwagens aus den genannten Gründen erwünscht ist, liegt der Erfindung die Aufgabe zugrunde, eine Feinjustierungsmöglichkeit zu schaffen, die einfach und robust im Aufbau ist, und die ihre volle Funktionsfähigkeit auch unter extremen Temperaturbedingungen nicht verliert.

Diese Aufgabe wird erfindungsgemäß dadurch gelöst, daß die Auflagefläche des auf der Tragschiene aufliegenden, die Greifvorrichtung tragenden Bügels und die entsprechende Auflagefläche der Tragschiene mit Zähnen unterschiedlicher Teilung versehen sind, und daß zwischen der Auflagefläche des Bügels und der Auflagefläche der Tragschiene ein Zwischenstück in Form einer Differential-Zahnleiste mit oberen und unteren, jeweils den Zähnen des Bügels bzw. der Tragschiene angepaßten Zähnen angeordnet ist.

Die Zähne als solche können verhältnismäßig grobe Abmessungen aufweisen, da erfindungsgemäß nicht die Abmessungen der Zähne als solche die Stufen der Einstellmöglichkeit bestimmen, sondern die Differenz der horizontalen Abmessungen der Zähne, die die untere Grenze der Verstellmöglichkeit bestimmt. Wenn z. B. die Zähne auf der einen Seite des Zwischenstückes eine Teilung von 6 mm, und auf der anderen Seite eine Teilung von 4 mm aufweisen, dann ergibt sich daraus ein minimaler Verstellweg von 2 mm, was in vielen Fällen ausreichend ist. Durch Wahl eines anderen Verhältnisses der Zahnteilung, beispielsweise von 6 mm und 5 mm, kann der kleinste Verstellweg auf 1 mm herabgesetzt werden. Die Ausbildung der Zähne kann dabei in jedem Fall so grob gewählt sein, daß die Vorrichtung auch bei extrem hohen Temperaturbelastungen und Temperaturwechseln voll funktionsfähig bleibt.

Weiterbildungen der Erfindung und vorteilhafte Ausgestaltungen sind Gegenstand der Unteransprüche.

Bevorzugte Ausführungsbeispiele der Erfindung sind in den Zeichnungen dargestellt und werden nachfolgend im einzelnen beschrieben. Von den Zeichnungen zeigt

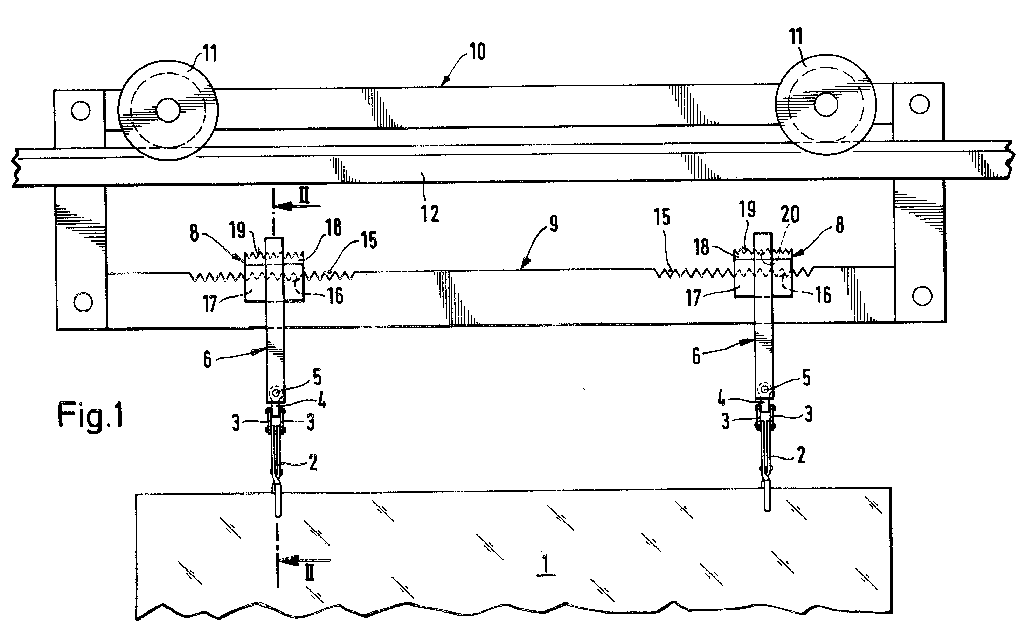

Fig. 1 eine erfindungsgemäße Transportvorrichtung in einer Gesamtansicht,

Fig. 2 eine Einzelheit aus Fig. 1 in Form eines vertikalen Schnittes entlang der Linie II-II,

Fig. 3 einen senkrechten Schnitt durch das als doppelte Zahnleiste ausgebildete Zwischenstück entsprechend der Linie III-III in Fig. 2,

Fig. 4 eine Aufsicht auf das als doppelte Zahnleiste ausgebildete Zwischenstück,

Fig. 5 einen vertikalen Schnitt durch den Bügel entsprechend der Linie V-V in Fig. 2, und

Fig. 6 eine als Mehrfachgehänge ausgebildete Transportvorrichtung mit den Merkmalen der Erfindung.

Eine Silikatglasscheibe 1 wird mit Hilfe von sich unter Schwerkraftwirkung schließenden zangenförmigen Greifvorrichtungen 2 in vertikaler Lage hängend durch die verschiedenen Bearbeitungsstationen hindurchgefahren. Die Hebel der Greifvorrichtungen 2 sind über Hebel 3 an einem Zwischenstück 4 befestigt. Das Zwischenstück 4 ist mit Hilfe des Bolzens 5 zwischen den beiden Armen des Bügels 6 befestigt. Der Bügel 6 ruht auf dem Zwischenstück 8 auf der Tragschiene 9 des Transportwagens 10, der mit Rädern 11 versehen und entlang Schienen 12 verfahrbar ist.

Die Tragschiene 9 ist in den Bereichen, in denen sie die Bügel 6 trägt, mit Zähnen 15 versehen. In diese Zähne 15 greifen die Zähne 16 des Zwischenstückes 8 ein. Das Zwischenstück 8 ist reiterförmig ausgebildet und besteht aus zwei die Tragschiene 9 seitlich übergreifenden Platten 17, die mit der eigentlichen Differentialzahnleiste 18 verbunden sind. Die Differentialzahnleiste 18 weist entlang ihrer oberen Fläche Zähne 19 auf, in die die Zähne 20 des Bügels 6 übergreifen. Die Zähne 20 sind in dem Verbindungsstück 21 eingearbeitet, das zusammen mit den seitlichen Laschen den Bügel 16 bildet.

Die Zähne 15 und 16 weisen an ihrer Basis eine Breite von 6 mm auf, die Zähne 19 und 20 eine Breite von 4 mm.

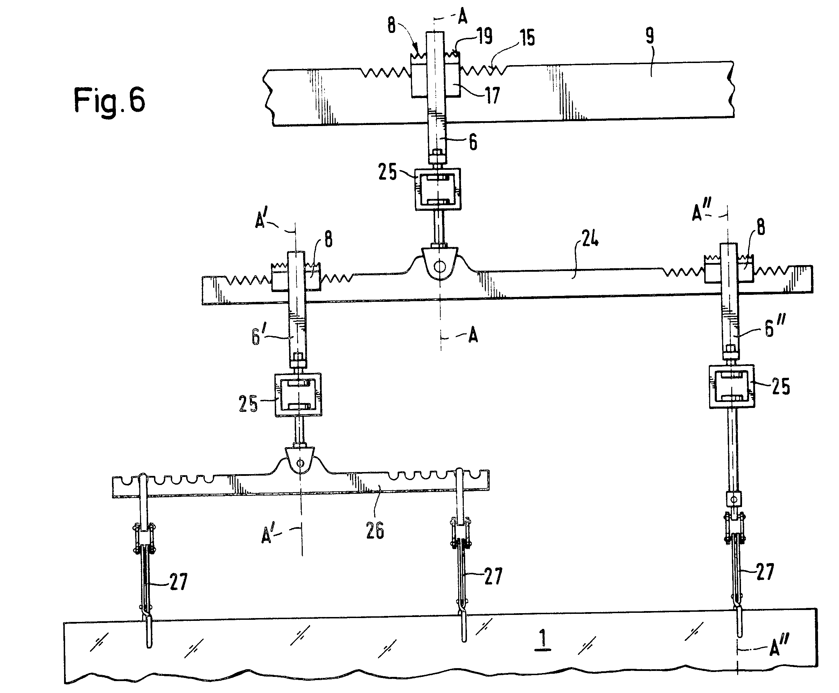

Fig. 6 stellt ein erfindungsgemäß ausgebildetes Mehrfachgehänge dar. Bei diesem Mehrfachgehänge kann sich der Waagebalken 24 um die senkrechte Achse A-A drehen. Das wird erreicht durch Zwischenschaltung eines Drehlagers 25 zwischen den Bügel 6 und den Waagebalken 24. Auf dem einen Hebel des Waagebalkens 24 ruht der einen weiteren Waagebalken 26 tragende Bügel 6', während auf dem anderen Hebel des Waagebalkens 24 der Bügel 6'' aufliegt, der die Zange 27 trägt. Der Waagebalken 26 und die Zange 27 sind an den Bügeln 6' bzw. 6'' ebenfalls unter Zwischenschaltung eines Drehlagers 25 befestigt. Der Waagebalken 26 kann sich so um die vertikale Achse A'-A', und die Zange 27 um die vertikale Achse A''-A'', drehen.

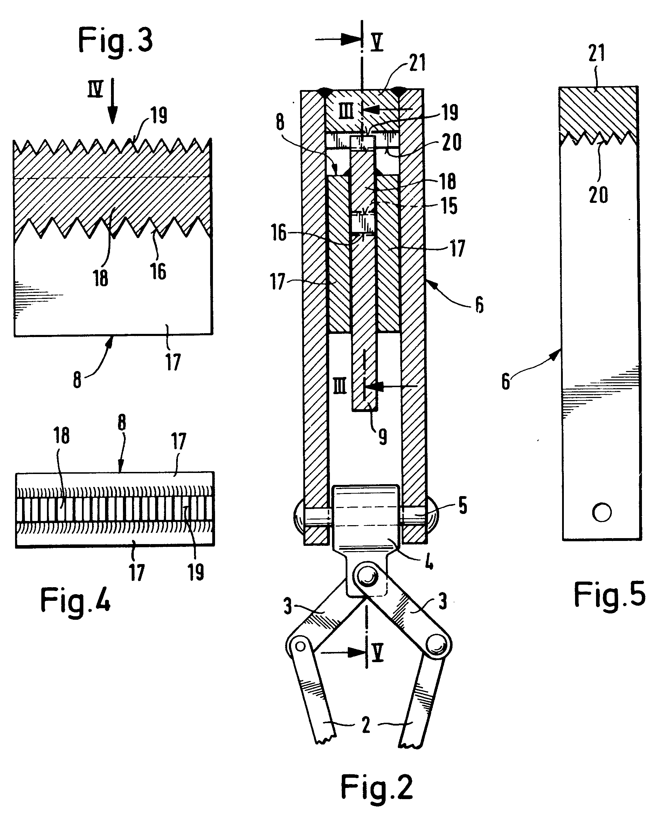

Die Lage der Achsen A-A, A'-A' und A''-A'' soll um verhältnismäßig kleine Stufen verschiebbar sein. Zu diesem Zweck ist zwischen dem Bügel 6 und dem Tragbalken 9 einerseits, und zwischen den Bügeln 6' und 6'' und dem Waagebalken 24 andererseits ein Zwischenstück 8 zwischengeschaltet. Die Bügel 6, 6' und 6'', die Tragschiene 9 und der Waagebalken 24, sowie das Zwischenstück 8 haben dabei grundsätzlich die an Hand der Fig. 2 bis 5 beschriebene Ausbildung.

## Patentansprüche

1. Vorrichtung zum Transportieren von Glasscheiben in vertikaler Lage durch eine Behandlungsstation mit Hilfe von die Glasscheiben an ihrer oberen Kante fassenden, unter Schwerkraftwirkung sich schließenden, an einem Bügel (6) befestigten Greifvorrichtungen (2), wobei der oder die Bügel (6) auf einer Tragschiene (9) eines verfahrbaren Transportwagens (10) justierbar aufliegen, dadurch gekennzeichnet, daß die Auflagefläche des oder jedes Bügels (6) und die Auflagefläche der Tragschiene (9) mit Zähnen (20; 15) unterschiedlicher Teilung versehen sind, und daß zwischen dem Bügel (6) und der Tragschiene (9) ein Zwischenstück (8) mit einer Differential-Zahnleiste (18) mit oberen und unteren jeweils den Zähnen (20; 15) des Bügels (6) bzw. der Tragschiene (9) angepaßten Zähnen (19; 16) angeordnet ist.

2. Vorrichtung nach Anspruch 1, dadurch gekennzeichnet, daß die Differenz der Zahnteilung etwa 1 bis 2 mm beträgt.

3. Vorrichtung nach Anspruch 1 und 2, dadurch gekennzeichnet, daß die Auflagefläche der Tragschiene (9) und die untere Auflagefläche der Differential-Zahnleiste (18) eine Zahnteilung von etwa 6 mm, und die Auflagefläche des Bügels (6) und die obere Auflagefläche der Differential-Zahnleiste (18) eine Zahnteilung von etwa 4 mm aufweisen.

4. Vorrichtung nach Anspruch 1 bis 3 mit mehreren Bügeln, dadurch gekennzeichnet, daß an den Bügeln (6, 6') Gehänge mit mehreren Greifvorrichtungen angeordnet sind.

## Claims

1. An apparatus for transporting pieces of flat glass in an upright position through a processing station with the help of grippers (2) kept tightly gripped on the top edges of the pieces of glass by the weight of the glass, the grippers (2) being supported on a hanger (6), which is or are supported adjustably on a support rail (9) of a moving transport carriage (10), characterized in that the support face of the or each hanger (6) and the support face of the support rail (9) have differently pitched teeth (20; 15) and in that between the hanger (6) and the support rail (9) there is an inbetween piece (8) having a differential toothed bar (18) with upper and lower teeth (19; 16) designed for use with the teeth (20; 15) of the hanger (6) and, in the other case, of the support rail (9).

2. An apparatus as claimed in claim 1, characterized in that the difference in the tooth pitch is equal to about 1 to 2 mm.

3. An apparatus as claimed in claims 1 and 2, characterized in that the support face of the support rail (9) and the lower support face of the differential tooth bar (18) have a tooth pitch of about 6 mm and the support face of the hanger (6) and the top support face of the differential tooth bar (18) have a tooth pitch of about 4 mm.

4. An apparatus as claimed in anyone of claims 1 to 3 having more than one hanger, characterized in that hanging connections, each with a number of grippers, are placed on the hangers (6, 6').

**Revendications**

1. Dispositif pour transporter des feuilles de verre en position verticale à travers un poste de traitement au moyen de dispositifs de préhension (2) qui saisissent les feuilles de verre par leur bord supérieur qui se ferment par gravité et qui sont fixés à un étrier (6), le ou les étriers (6) étant placés de façon ajustable sur une barre de support (9) d'un chariot de transport déplaçable (10), caractérisé en ce que la surface d'appui de l'étrier (6) ou de chaque étrier (6) et la surface d'appui de la barre de support (9) sont pourvues de dents (20, 15) de pas différents, et entre l'étrier (6) et la barre de support (9) est prévue une pièce intermédiaire (8) ayant la forme d'une latte à denture différentielle (18) comportant des dents supérieures et inférieures (19, 16) adaptées respectivement aux dents (20, 15) de l'étrier (6) et de la barre de support (9).

2. Dispositif suivant la revendication 1, caractérisé en ce que la différence de pas des dents est de 1à 2 mm environ

3. Dispositif suivant les revendications 1 et 2, caractérisé en ce que la surface d'appui de la barre de support (9) et la surface d'appui inférieure de la latte à denture différentielle (18) présentent des dents d'un pas d'environ 6 mm et la surface d'appui de l'étrier (6) ainsi que la surface d'appui supérieure de la latte à denture différentielle (18) présentent des dents d'un pas d'environ 4 mm.

4. Dispositif suivant les revendications 1 à 3 comportant plusieurs étriers, caractérisé en ce que des dispositifs de suspension comportant plusieurs dispositifs de préhension sont montés sur les étriers (6, 6').

Fig.1

# Fig.3

IV

19

18    16

8

17

# Fig.4

18    8    17

17    19

V

21

III    19

8    20

18

15

16

17

17    6

III

9

5

4

3    3

V

2

# Fig.2

21

6

20

6

# Fig.5

Fig.6